(19) Europäisches Patentamt
European Patent Office
Office européen des brevets

(11) **EP 4 040 640 B1**

(12) **EUROPÄISCHE PATENTSCHRIFT**

(45) Veröffentlichungstag und Bekanntmachung des Hinweises auf die Patenterteilung:
**04.09.2024  Patentblatt 2024/36**

(21) Anmeldenummer: **22153973.7**

(22) Anmeldetag: **28.01.2022**

(51) Internationale Patentklassifikation (IPC):
**H02J 50/12** *(2016.01)*

(52) Gemeinsame Patentklassifikation (CPC):
**H02J 50/12; H02M 7/4815; H02M 7/538; H02M 7/5395;** H02M 7/5387

(54) **VERFAHREN ZUM BETREIBEN EINER VORRICHTUNG ZUM DRAHTLOSEN ÜBERTRAGEN VON ENERGIE IN RICHTUNG EINES ELEKTRISCHEN VERBRAUCHERS MITTELS INDUKTIVER KOPPLUNG, VORRICHTUNG UND SYSTEM**

METHOD FOR OPERATING A DEVICE FOR WIRELESS TRANSMISSION OF ENERGY IN THE DIRECTION OF AN ELECTRICAL CONSUMER BY MEANS OF INDUCTIVE COUPLING, DEVICE AND SYSTEM

PROCÉDÉ DE FONCTIONNEMENT D'UN DISPOSITIF DE TRANSMISSION SANS FIL DE L'ÉNERGIE DANS LA DIRECTION D'UN CONSOMMATEUR ÉLECTRIQUE AU MOYEN D'UN COUPLAGE INDUCTIF, DISPOSITIF ET SYSTÈME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.02.2021  DE 102021201220**

(43) Veröffentlichungstag der Anmeldung:
**10.08.2022  Patentblatt 2022/32**

(73) Patentinhaber: **E.G.O. Elektro-Gerätebau GmbH 75038 Oberderdingen (DE)**

(72) Erfinder:
• **Egenter, Christian
75015 Bretten (DE)**
• **Müller, Max-Felix
75038 Oberderdingen (DE)**

(74) Vertreter: **Patentanwälte
Ruff, Wilhelm, Beier, Dauster & Partner mbB
Kronenstraße 30
70174 Stuttgart (DE)**

(56) Entgegenhaltungen:
US-A1- 2008 035 633     US-A1- 2009 174 263
US-A1- 2011 304 216     US-A1- 2016 094 278

**Beschreibung**

Die Erfindung betrifft ein Verfahren zum Betreiben einer Vorrichtung zum drahtlosen Übertragen von Energie in Richtung eines elektrischen Verbrauchers mittels induktiver Kopplung, eine Vorrichtung und ein System.

Die US 2008/0035633 A1 offenbart eine Induktionsheizvorrichtung zum Erhitzen von Werkstücken, bei der eine konstante Soll-Leistung eingeregelt wird, indem ein Tastgrad so lange verändert wird, bis eine gemessene Ist-Leistung der Soll-Leistung entspricht.

Die US 2009/0174263 A1 offenbart ein induktives Netzteil, bei dem als Stellgrößen einer Leistungsregelung eine Frequenz und ein Tastgrad gemeinsam verändert werden.

Die US 2016/0094278 A1 offenbart eine Vorrichtung zur drahtlosen Energieübertragung mittels induktiver Kopplung, bei der ein Wechselrichter aus einer Gleichspannung gespeist ist, die durch Gleichrichten einer Wechselspannung erzeugt wird.

Die US 2011/0304216 A1 zeigt ein induktives Netzteil, bei dem ein Wechselrichter aus einer Gleichspannung gespeist ist, die durch Gleichrichten einer Wechselspannung erzeugt wird.

Der Erfindung liegt die Aufgabe zugrunde, ein Verfahren zum Betreiben einer Vorrichtung zum drahtlosen Übertragen von Energie in Richtung eines elektrischen Verbrauchers mittels induktiver Kopplung, eine Vorrichtung und ein System zur Verfügung zu stellen, die einen möglichst zuverlässigen und flexiblen Betrieb ermöglichen.

Das Verfahren dient zum Betreiben einer Vorrichtung zum drahtlosen Übertragen von Energie in Richtung eines elektrischen Verbrauchers mittels induktiver Kopplung, auch als Wireless Power Transfer, WPT, bezeichnet. Hinsichtlich der Grundlagen zu WPT sei auch auf die einschlägige Fachliteratur verwiesen. Bevorzugt wird die Vorrichtung gemäß dem WPC (Wireless Power Consortium) Ki (Cordless Kitchen) Verfahren betrieben.

Die Vorrichtung zum drahtlosen Übertragen von Energie in Richtung eines elektrischen Verbrauchers mittels induktiver Kopplung kann auch als Transmitter bezeichnet werden und der elektrische Verbraucher kann als Receiver bezeichnet werden.

Die Vorrichtung weist einen herkömmlichen einphasigen oder mehrphasigen Gleichrichter zum Erzeugen einer Gleichspannung aus einer insbesondere sinusförmigen Netzspannung auf.

Die Vorrichtung weist einen aus der Gleichspannung gespeisten Wechselrichter auf. Der Wechselrichter kann beispielsweise ein Halbbrücken-Wechselrichter oder ein Vollbrücken-Wechselrichter sein. Der Wechselrichter ist dazu ausgebildet, ein pulsweitenmoduliertes Ansteuersignal, insbesondere in Form einer pulsweitenmodulierten Ansteuerspannung, zu erzeugen.

Die Vorrichtung weist eine herkömmliche mittels des Wechselrichters bzw. dessen pulsweitenmodulierten Ansteuersignals angesteuerte Spule oder Transmitterspule auf, die dazu ausgebildet ist, zum Übertragen der Energie ein magnetisches Wechselfeld zu erzeugen.

Das Verfahren weist die folgenden Schritte auf.

Die von dem Wechselrichter abgegebene elektrische Ist-Leistung wird auf eine vorgebbare elektrische Soll-Leistung geregelt, wobei als Stellgrößen der Regelung eine Frequenz und ein Tastgrad des pulsweitenmodulierten Ansteuersignals dienen. Bei einem Wechselrichter mit einer Halbbrücke gibt hierbei der Tastgrad (Englisch Duty Cycle) des mittels des Wechselrichters erzeugten pulsweitenmodulierten Ansteuersignals, das eine periodische Folge von Impulsen darstellt, das Verhältnis der Impulsdauer zur Periodendauer an. Der Tastgrad wird als Verhältniszahl der Dimension Zahl mit einem Wertebereich von 0 bis 1 oder 0 bis 100 % angegeben. Bei einem Wechselrichter mit einer Vollbrücke kann der Tastgrad beispielsweise einen Phasenwinkel der beiden mittels der zugehörigen Brückenzweige erzeugten rechteckförmigen Signale bezeichnen und Werte zwischen 0 ° und 360 ° annehmen.

Zum Einregeln auf die Soll-Leistung, beispielsweise ausgehend von einer Ist-Leistung von 0 W, werden folgende Schritte durchgeführt.

In einem Schritt a) wird zunächst eine Start-Frequenz des pulsweitenmodulierten Ansteuersignals eingestellt.

In einem Schritt b) wird ein Start-Tastgrad des pulsweitenmodulierten Ansteuersignals derart eingestellt, dass die Soll-Leistung sicher unterschritten wird. Ein solcher Start-Tastgrad kann beispielsweise durch Versuche und/oder rechnerisch ermittelt werden, wobei ein Tastgrad von 15% für viele Fälle einen geeigneten Startwert gemäß obigem Kriterium darstellt. Der Start-Tastgrad kann abhängig von der Soll-Leistung gewählt werden. Je höher die Soll-Leistung desto höher kann auch der Start-Tastgrad gewählt werden.

In einem Schritt c) wird eine durch den Wechselrichter abgegebene elektrische Ist-Leistung bei der eingestellten Start-Frequenz und dem eingestellten Start-Tastgrad gemessen. Die durch den Wechselrichter abgegebene Leistung kann beispielsweise herkömmlich durch Spannungs- und Strommessung und geeignete Verrechnung der gemessenen Größen bestimmt werden. Im Übrigen sei insoweit ebenfalls auf die einschlägige Fachliteratur verwiesen.

In einem Schritt d) wird eine Einregel-Soll-Leistung gewählt, die kleiner als oder gleich wie die Soll-Leistung ist. Vorzugsweise wird ein Unterschied zwischen der zuvor gemessenen elektrischen Ist-Leistung und der nächsten Einregel-Soll-Leistung nicht zu groß gewählt. Beispielsweise kann die initiale Einregel-Soll-Leistung grundsätzlich einem vorgebbaren bzw. vorgegebenen Anteil der Soll-Leistung oder der zuvor gemessenen Ist-Leistung entsprechen, beispielsweise +-80 % der zuvor gemessenen Ist-Leistung entsprechen.

In einem Schritt e) wird ein Tastgrad des pulsweitenmodulierten Ansteuersignals berechnet, der der Einregel-Soll-Leistung rechnerisch entspricht.

In einem Schritt f) wird der berechnete Tastgrad eingestellt.

In einem Schritt g) wird eine durch den Wechselrichter abgegebene elektrische Ist-Leistung bei der eingestellten Frequenz und dem eingestellten Tastgrad ermittelt.

In einem Schritt h) werden die Schritte d) bis g) bei kontinuierlich zunehmender Einregel-Soll-Leistung so lange wiederholt, bis eine Abweichung zwischen der Soll-Leistung und der sich einstellenden Ist-Leistung eine vorgegebene Schwelle unterschreitet. Die Schwelle kann absolut oder relativ vorgegeben sein und kann beispielsweise 30 Watt oder 2 % der Soll-Leistung betragen, um lediglich exemplarische Zahlenwerte zu nennen.

Die Zunahme bzw. Erhöhung der Einregel-Soll-Leistung kann derart gewählt werden, dass eine Anzahl an Wiederholungen auf 3 Wiederholungen, insbesondere 2 Wiederholungen, insbesondere 1 Wiederholung, beschränkt wird.

Das erfindungsgemäße Verfahren erlaubt ein sehr schnelles Einregeln der Ist-Leistung auf eine Soll-Leistung und begrenzt das Überschwingen, welches zu einer Überspannung im Verbraucher führen könnte. Des Weiteren stellt das erfindungsgemäße Verfahren nur geringe Anforderungen an die Kenntnis über das reale Verhalten der Übertragungsstrecke.

In einer Ausführungsform wird im Schritt e) der Tastgrad, der der Einregel-Soll-Leistung rechnerisch entspricht, berechnet basierend auf dem im vorangegangenen Schritt e) berechneten Tastgrad, der im vorangegangenen Schritt g) gemessenen Ist-Leistung und der aktuellen bzw. momentanen Einregel-Soll-Leistung.

Nachfolgend wird die Berechnung des Tastgrads exemplarisch beschrieben.

Es gilt:

$$P \sim U^2 * \cos^2 \phi \qquad \text{für} \quad Re(\underline{Z}) = \text{konstant}$$

Hierbei bezeichnet $\phi$ einen Phasenwinkel zwischen Strom und Spannung. In der Nähe einer Resonanz der Übertragungsfunktion ist $\cos \phi = 1$. Bei konstanter Arbeitsfrequenz kann $\cos \phi$ für die nachfolgenden Betrachtungen bzw. Berechnungen in guter Näherung als konstant angenommen werden und damit wie Re(Z) vernachlässigt werden.

$$U\_DC = U\_N * \sin(\pi * DC) \qquad \text{mit DC} = 0 ...50\%$$

Hierbei bezeichnet DC den Tastgrad (Duty Cycle). U_N bezeichnet einen Effektivwert einer mittels des Gleichrichters gleichgerichteten sinusförmigen Netzspannung. U_DC bezeichnet einen Effektivwert der mittels des Wechselrichters erzeugten pulsweitenmodulierten Ansteuerspannung bei gegebenen Tastgrad DC.

Für die Berechnung wird eine aussteuerungsunabhängige lineare und zeitinvariante Impedanz Z angenommen. Die Arbeitsfrequenz zwischen zwei Schritten muss gleich sein, da Z(f) sich bezüglich einer Frequenzänderung zumeist nicht-linear verhält. Soll die Arbeitsfrequenz nach einem Schritt geändert werden, so muss zuerst wieder ein initialer Tastgrad gewählt werden und bei der neuen Frequenz die neue Leistung gemessen werden, bevor die genannten Berechnungsformeln wieder angewandt werden dürfen

Im Folgenden wird der im vorangegangenen Schritt e) berechnete Tastgrad als DC_alt bezeichnet. Die im vorangegangenen Schritt g) gemessene Ist-Leistung wird als P_alt bezeichnet. Die im vorangegangenen Schritt eingestellt Frequenz wird als f_alt bezeichnet. Die gewählte Einregel-Soll-Leistung des aktuellen oder momentanen Schritts d) wird als P_neu bezeichnet.

Der zu berechnende Tastgrad wird als DC_neu bezeichnet. Der Effektivwert der mittels des Wechselrichters erzeugten pulsweitenmodulierten Ansteuerspannung im vorangegangenen Schritt wird als U_DC_alt bezeichnet. Der Effektivwert der mittels des Wechselrichters erzeugten pulsweitenmodulierten Ansteuerspannung im aktuellen Schritt wird als U_DC_neu bezeichnet.

Vorzugsweise wird P_neu maximal zwischen dem 2,5-fachen oder dem 2-fachen von P_alt gewählt, um Fehler durch Nichtlinearität (Amplitude, Temperatur, Anteil an höher-Harmonischen, Schaltverzögerung, etc.) des realen Z(f) in einem akzeptablen Rahmen zu halten. Das Verhältnis von P_neu zu P_alt kann bei jeder folgenden Wiederholung zunehmend kleiner gewählt werden.

Es gilt:

$$U\_DC\_neu = \sqrt{\frac{P\_neu}{P\_alt}} * U\_DC\_alt \qquad \text{gilt für} \quad \underline{Z}(f\_neu) = \underline{Z}(f\_alt)$$

$$\sin(\pi \cdot DC\_neu) = \sqrt{\frac{P\_neu}{P\_alt}} \cdot \sin(\pi \cdot DC\_alt) \qquad \text{bei} \quad f\_alt = f\_neu \text{ und } U\_N = \text{konstant}$$

Die obige Formel kann schließlich nach DC_neu durch Anwenden der Inversfunktion Arcussinus aufgelöst werden.

In einer Ausführungsform wird die Einregel-Soll-Leistung für die, insbesondere erste, Wiederholung der Schritte d) bis g) auf das 2,5-fache, insbesondere das 2-fache, der im vorangegangenen Schritt d) gewählten Einregel-Soll-Leistung begrenzt. Entsprechend kann die erstmals gewählte Einregel-Soll-Leistung, d.h. die vor einer Wiederholung der Schritte d) bis g) gewählte Einregel-Soll-Leistung, auf das 2,5-fache, insbesondere das 2-fache, der im Schritt c) gemessenen elektrischen Ist-Leistung begrenzt werden.

In einer Ausführungsform werden, sobald die Abweichung zwischen der Soll-Leistung und der Ist-Leistung die vorgegebene Schwelle unterschreitet, die Frequenz und der Tastgrad bei theoretisch gleichbleibender Soll-Leistung so lange verändert, bis sich ein Arbeitspunkt aus Frequenz und Tastgrad einstellt, der einem Optimierungskriterium genügt.

In einer Ausführungsform ist das Optimierungskriterium eine minimale elektrische Verlustleistung des Wechselrichters.

In einer Ausführungsform weist der Arbeitspunkt, der dem Optimierungskriterium genügt, bei einem Halbbrücken-Wechselrichter einen Tastgrad von größer als 40 % auf, insbesondere einen Tastgrad nahe 50 % auf. Bei einem Vollbrücken-Wechselrichter weist der Arbeitspunkt, der dem Optimierungskriterium genügt, einen Phasenwinkel zwischen den beiden Brücken-Zweigen der Vollbrücke von > 150°, insbesondere von nahe 180° auf. In einer Ausführungsform mit mehreren Wechselrichtern kann das Synchronisieren auf eine gemeinsame Arbeitsfrequenz ein Optimierungskriterium darstellen.

In einer Ausführungsform basiert die Start-Frequenz auf Daten, die vom elektrischen Verbraucher an die Vorrichtung kommuniziert werden. Die Größe des Spulendurchmessers des Receivers, seine Nennleistung oder weitere Daten, die zur Systemcharakterisierung verwendet werden können, erlauben beispielsweise der Vorrichtung die Übertragungsfunktion P(f) abzuschätzen und zusammen mit der Soll-Leistung eine geeignete Startfrequenz f_0 auszuwählen.

In einer Ausführungsform wird im Schritt g) zusätzlich zur Ist-Leistung mindestens ein Schaltstrom beim Ausschalten eines Halbleiterschalters des Wechselrichters bestimmt, wobei die Frequenz für eine folgende Wiederholung der Schritte d) bis g) erhöht wird, wenn der Schaltstrom einen kapazitiven Grenzwert überschreitet. Kapazitiv bedeutet hierbei, dass der Strom nach einem Vorzeichenwechsel auf eine parallele Diode zum Schalter gezwungen wurde, so dass der nächste Schalter nicht mehr stromlos eingeschaltet werden kann. Je größer der Schaltstrom, desto größer sind die Verluste. Wenn der Schaltstrom bei gegebenem Tastgrad zu hoch ist, dann deutet dies auf eine zu niedrig gewählte Arbeitsfrequenz hin.

Die erfindungsgemäße Vorrichtung dient zum drahtlosen Übertragen von Energie in Richtung eines elektrischen Verbrauchers mittels induktiver Kopplung und ist zur Durchführung des oben beschriebenen Verfahrens ausgebildet.

Die Vorrichtung weist auf: einen Gleichrichter zum Erzeugen einer Gleichspannung aus einer Netzspannung, einen aus der Gleichspannung gespeisten Wechselrichter, eine mittels des Wechselrichters angesteuerte Spule, mittels der zum Übertragen der Energie ein magnetisches Wechselfeld erzeugbar ist, und eine Steuereinheit, die dazu ausgebildet ist, den Wechselrichter derart anzusteuern, dass ein oben beschriebenes Verfahren ausgeführt wird.

In einer Ausführungsform ist die Vorrichtung Bestandteil eines Induktionskochfeldes.

Das erfindungsgemäße System weist eine oben beschriebene Vorrichtung zum drahtlosen Übertragen von Energie in Richtung eines elektrischen Verbrauchers mittels induktiver Kopplung auf einen elektrischen Verbraucher auf.

Die Erfindung wird nachfolgend unter Bezugnahme auf die Zeichnungen detailliert beschrieben. Hierbei zeigt:

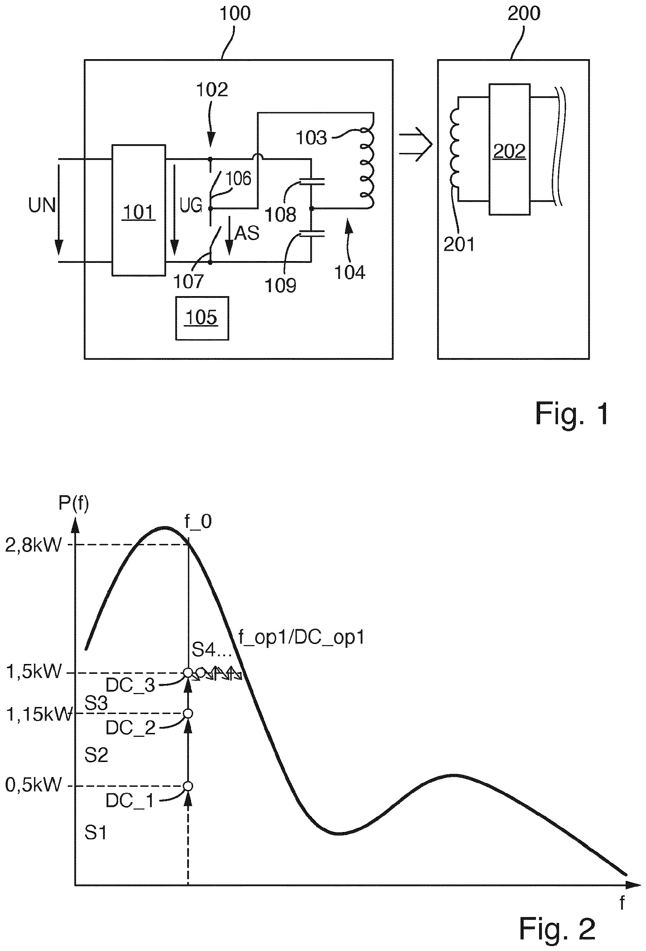

Fig. 1     hoch schematisch ein System mit einer Vorrichtung zum drahtlosen Übertragen von Energie in Richtung eines elektrischen Verbrauchers mittels induktiver Kopplung und einen mittels der Vorrichtung versorgten elektrischen Verbraucher, und

Fig. 2     eine exemplarische Übertragungsfunktion, die eine mittels der Vorrichtung in Richtung des elektrischen Verbrauchers übertragbare elektrische Leistung über der Frequenz charakterisiert, und schematisch eine erfindungsgemäße Schrittfolge zum Einregeln der von der Vorrichtung abgegebenen elektrischen Leistung auf eine eingestellte elektrische Soll-Leistung.

Fig. 1 zeigt hoch schematisch ein System mit einer Vorrichtung 100 zum drahtlosen Übertragen von Energie oder elektrischer Leistung in Richtung eines elektrischen Verbrauchers 200 mittels induktiver Kopplung und einen elektrischen Verbraucher 200. Derartige Systeme sind grundsätzlich bekannt und werden auch als WPT-Systeme bezeichnet.

Die Vorrichtung 100 kann beispielsweise Bestandteil eines Induktionskochfelds sein oder ein Induktionskochfeld bilden.

Die Vorrichtung 100 weist einen herkömmlichen Gleichrichter 101 zum Erzeugen einer Gleichspannung UG aus einer einphasigen sinusförmigen Netzspannung UN auf. Der Gleichrichter 101 kann beispielsweise als Brückengleichrichter realisiert sein.

Die Vorrichtung 100 weist weiter einen aus der Gleichspannung UG gespeisten Halbbrücken-Wechselrichter 102 auf. Der Wechselrichter 102 weist zwei in Reihe zwischen den Ausgang des Gleichrichters 101 eingeschleifte Halbleiterschaltmittel 106 und 107 auf.

Die Vorrichtung 100 weist weiter eine mittels des Wechselrichters 102 angesteuerte Spule 103 auf, mittels der zum Übertragen der Energie ein magnetisches Wechselfeld erzeugbar ist. Hierzu erzeugt der Wechselrichter 102 ein pulsweitenmoduliertes Ansteuersignal AS, das zur Ansteuerung der Spule 103 bzw. eines die Spule 103 aufweisenden Schwingkreises 104 dient.

Die Spule 103 ist induktiv mit einer Empfängerspule 201 des elektrischen Verbrauchers 200 gekoppelt, wobei der Empfängerspule 201 ein Gleichrichter 202 sowie einen Resonanzkondensator und weitere nicht näher dargestellte Komponenten des elektrischen Verbrauchers 200 nachgeschaltet sind. Im Übrigen sei insoweit auch auf die einschlägige Fachliteratur verwiesen. Typischerweise beinhaltet der Verbraucher 200 ein Bedienteil, über das eine Betriebsart ausgewählt werden kann. Abhängig von der Betriebsart wird eine Soll-Leistung gewählt und an die Vorrichtung übertragen. In einer Konfigurationsphase können weitere Systemparameter des Verbrauchers an die Vorrichtung kommuniziert werden.

Die Vorrichtung 100 weist weiter zwei in Reihe zwischen den Ausgang des Gleichrichters 101 eingeschleifte Kondensatoren 108 und 109 auf. Die Spule 103 ist zwischen einen Verbindungsknoten der Halbleiterschaltmittel 106 und 107 und einen Verbindungsknoten der Kondensatoren 108 und 109 eingeschleift. Im Übrigen sei hinsichtlich dieser an sich bekannten Topologie auch auf die einschlägige Fachliteratur verwiesen.

Die Vorrichtung 100 weist weiter eine Steuereinheit 105 auf, beispielsweise in Form eines herkömmlichen Mikroprozessors, die/der den Betrieb der Vorrichtung 100 wie nachfolgend beschrieben steuert.

Die Steuereinheit 105 regelt eine von dem Wechselrichter 102 abgegebene elektrische Ist-Leistung auf eine vorgebbare elektrische Soll-Leistung, wobei als Stellgrößen der Regelung eine Frequenz und ein Tastgrad des pulsweitenmodulierten Ansteuersignals AS dienen. Insoweit sei auch auf die einschlägige Fachliteratur verwiesen.

Fig. 2 zeigt eine Übertragungsfunktion P(f), wobei die Übertragungsfunktion P(f) eine mittels der Vorrichtung 100 in Richtung des elektrischen Verbrauchers 200 übertragbare elektrische Leistung P über der Frequenz f bei einem Tastgrad von 50 % charakterisiert.

Das erfindungsgemäße Einregeln auf die Soll-Leistung wird nachfolgend beschrieben.

Bei den nachfolgenden Erläuterungen wird als einzuregelnde Soll-Leistung exemplarisch 1,5 kW angenommen.

Bei den nachfolgenden Erläuterungen wird weiter die Vorrichtung 100 zum drahtlosen Übertragen von Energie als Transmitter bezeichnet und der elektrische Verbraucher 200 als Receiver bezeichnet. Entsprechend wird die Spule 103 der Vorrichtung bzw. des Transmitters 100 als Transmitterspule bezeichnet und die korrespondierende Spule 201 des elektrischen Verbrauchers bzw. Receivers 200 als Receiverspule bezeichnet.

Der Steuereinheit 105 bzw. deren Regler kennt zum Zeitpunkt des Starts der Regelung die Übertragungsfunktion P(f) (noch) nicht. Dennoch soll in wenigen Regelschritten die geforderte Soll-Leistung durch geeignete Einstellung von Frequenz und Tastgrad des Ansteuersignals AS eingeregelt werden. Vorliegend werden zum Einregeln der Soll-Leistung lediglich 3 Schritte benötigt, wobei sich bei gleichbleibender Leistung noch Effizienzoptimierungsschritte anschließen können.

Der Transmitter 100 kennt dank seiner Einbausituation den Kopplungsrange und kann grob anhand der bekannten Nenn- und Soll-Leistung sowie der Größe der Receiverspule 201 abschätzen, welche Arbeitsfrequenz f typischerweise zur gewünschten Leistung führt.

In einer ersten Schrittfolge S1 wird eine Start-Frequenz f_0 gewählt, die typischerweise etwas niedriger liegt als die optimale Frequenz, um Leistungsreserven vorzuhalten. Vorliegend wird beispielsweise als Start-Frequenz f_0 eine Frequenz von 28 kHz gewählt. Durch Überwachen eines Schaltstroms des Wechselrichters 102 kann eine falsch gewählte Start-Frequenz f_0 erkannt und dann anders gewählt werden.

In der ersten Schrittfolge S1 wird folglich die Startfrequenz f_0 des pulsweitenmodulierten Ansteuersignals AS von 28 kHz eingestellt und ein Start-Tastgrad DC_1 derart eingestellt, dass die sich ergebende Ist-Leistung sicher kleiner ist als die Soll-Leistung. Beispielsweise kann ein Start-Tastgrad DC_1 von 15 % eingestellt werden. Je kleiner die Soll-Leistung, desto kleiner sollte der Start-Tastgrad DC_1 gewählt werden.

Anschließend wird in der ersten Schrittfolge S1 eine durch den Wechselrichter 102 abgegebene elektrische Ist-Leistung bei der eingestellten Start-Frequenz f_0 und dem eingestellten Start-Tastgrad DC_1 gemessen. Vorliegend beträgt die gemessene Ist-Leistung 500 W.

In einer nachfolgenden Schrittfolge S2 wird nun eine Einregel-Soll-Leistung von 1250 W gewählt, die nahe an der Soll-Leistung von 1500 W liegt aber etwas kleiner als diese ist. Die Einregel-Soll-Leistung von 1250 W beträgt das 2,5-fache der zuvor gemessenen Ist-Leistung.

Es wird dann in der Schrittfolge S2 ein Tastgrad DC2 berechnet und eingestellt, der bei Linearität zur gewählten Einregel-Soll-Leistung von 1250 W führen würde, d.h. der Einregel-Soll-Leistung - Linearität vorausgesetzt - rechnerisch entspricht. Vorliegend beträgt dieser Tastgrad DC2 25%.

Es wird dann in der Schrittfolge S2 erneut die durch den Wechselrichter 102 abgegebene elektrische Ist-Leistung bei der eingestellten Frequenz f_0 und dem eingestellten Tastgrad DC_2 gemessen. Aufgrund der Nichtlinearität beträgt die gemessene Leistung nicht 1250 W, sondern nur 1150 W.

In einer nachfolgenden Schrittfolge S3 wird nun eine Einregel-Soll-Leistung von 1500 W gewählt, die der Soll-Leistung von 1500 W entspricht. Ein unzulässiges Überschießen der ausgegebenen Leistung aufgrund der gewählten Einregel-Soll-Leistung von 1500 W kann ausgeschlossen werden, da die Leistungsänderung zwischen zwei Schritten begrenzt werden soll und innerhalb des verbleibenden Leistungsbereichs zwischen 1250 W und 1500 W eine ausreichende Linearität vorausgesetzt werden darf.

Es wird dann in der Schrittfolge S3 ein Tastgrad DC3 berechnet und eingestellt, der bei Linearität zur gewählten Einregel-Soll-Leistung von 1500 W führen würde, d.h. der Einregel-Soll-Leistung - Linearität vorausgesetzt - rechnerisch entspricht. Vorliegend beträgt der Tastgrad DC3 32%.

Es wird dann in der Schrittfolge S3 die durch den Wechselrichter 102 abgegebene elektrische Ist-Leistung bei der eingestellten Frequenz f_0 und dem eingestellten Tastgrad DC_3 gemessen. Vorliegend entspricht die gemessene Ist-Leistung der Soll-Leistung.

Daher wird anschließend ausgehend vom Arbeitsunkt des Ansteuersignals AS mit der Frequenz f_0 und dem Tastgrad DC_3 ein Arbeitspunkt des Ansteuersignals AS mit der Frequenz f_op1 und dem Tastgrad DC_op1 von 50 % in mehreren Schrittfolgen S4 bis Sn angefahren, wobei schrittweise jeweils die Frequenz f erhöht und der Tastgrad DC angepasst wird.

Die Größe dP/df bei konstantem Tastgrad DC zeigt, wie die Übertragungsfunktion P(f) bei der Frequenz f verläuft, so dass beispielsweise Minima erkannt werden können oder eine Frequenz auf der linken Seite eines Peaks der Übertragungsfunktion P(f).

## Patentansprüche

1. Verfahren zum Betreiben einer Vorrichtung (100) zum drahtlosen Übertragen von Energie in Richtung eines elektrischen Verbrauchers (200) mittels induktiver Kopplung, wobei die Vorrichtung aufweist:

   - einen Gleichrichter (101) zum Erzeugen einer Gleichspannung (UG) aus einer Netzspannung (UN),
   - einen aus der Gleichspannung (UG) gespeisten Wechselrichter (102), der dazu ausgebildet ist, ein pulsweitenmoduliertes Ansteuersignal (AS) zu erzeugen, und
   - eine mittels des pulsweitenmodulierten Ansteuersignals (AS) angesteuerte Spule (103), mittels der zum Übertragen der Energie ein magnetisches Wechselfeld erzeugbar ist,

   wobei das Verfahren die Schritte aufweist:

   - Regeln einer von dem Wechselrichter (102) abgegebenen elektrischen Ist-Leistung auf eine vorgebbare elektrische Soll-Leistung, wobei als Stellgrößen der Regelung eine Frequenz und ein Tastgrad des pulsweitenmodulierten Ansteuersignals (AS) dienen,
   - **dadurch gekennzeichnet, dass** zum Einregeln auf die Soll-Leistung folgende Schritte durchgeführt werden:

      a) Einstellen einer Start-Frequenz (f_0),
      b) Einstellen eines Start-Tastgrads (DC_1) derart, dass die Soll-Leistung unterschritten wird,
      c) Messen einer durch den Wechselrichter (102) abgegebenen elektrischen Ist-Leistung bei der eingestellten Start-Frequenz (f_0) und dem eingestellten Start-Tastgrad (DC_1),
      d) Wählen einer Einregel-Soll-Leistung, die kleiner als oder gleich wie die Soll-Leistung ist,
      e) Berechnen eines Tastgrads (DC_2), der der Einregel-Soll-Leistung rechnerisch entspricht,
      f) Einstellen des berechneten Tastgrads (DC_2),
      g) Messen einer durch den Wechselrichter (102) abgegebenen elektrischen Ist-Leistung bei der eingestellten Frequenz (f_0) und dem eingestellten Tastgrad (DC_2), und
      h) Wiederholen der Schritte d) bis g) bei zunehmender Einregel-Soll-Leistung so lange, bis eine Abweichung zwischen der Soll-Leistung und der Ist-Leistung eine vorgegebene Schwelle unterschreitet,

      - wobei im Schritt e) der Tastgrad (DC_3), der der Einregel-Soll-Leistung rechnerisch entspricht, berechnet wird basierend auf dem im vorangegangenen Schritt e) berechneten Tastgrad (DC_2), der im vorangegangenen Schritt g) gemessenen Ist-Leistung und der Einregel-Soll-Leistung.

**2.** Verfahren nach Anspruch 1, **dadurch gekennzeichnet, dass**

- die Einregel-Soll-Leistung für die Wiederholung der Schritte d) bis g) auf das 2,5-fache, insbesondere das 2-fache, der im vorangegangenen Schritt d) gewählten Einregel-Soll-Leistung begrenzt wird.

**3.** Verfahren nach einem der vorhergehenden Ansprüche, **dadurch gekennzeichnet, dass**

- sobald die Abweichung zwischen der Soll-Leistung und der Ist-Leistung die vorgegebene Schwelle unterschreitet, die Frequenz und der Tastgrad bei gleichbleibender Soll-Leistung so lange verändert werden, bis sich ein Arbeitspunkt aus Frequenz (f_op1) und Tastgrad einstellt, der einem Optimierungskriterium genügt.

**4.** Verfahren nach Anspruch 3, **dadurch gekennzeichnet, dass**

- das Optimierungskriterium eine minimale elektrische Verlustleistung des Wechselrichters (102) ist.

**5.** Verfahren nach Anspruch 4, **dadurch gekennzeichnet, dass**

- der Arbeitspunkt, der dem Optimierungskriterium genügt, bei einem Halbbrücken-Wechselrichter (102) einen Tastgrad von größer als 40 % aufweist, insbesondere einen Tastgrad nahe 50 % aufweist.

**6.** Verfahren nach einem der vorhergehenden Ansprüche, **dadurch gekennzeichnet, dass**

- die Start-Frequenz (f_0) auf Daten basiert, die vom elektrischen Verbraucher (200) an die Vorrichtung (100) kommuniziert werden.

**7.** Verfahren nach einem der vorhergehenden Ansprüche, **dadurch gekennzeichnet, dass**

- im Schritt g) zusätzlich zur Ist-Leistung mindestens ein Schaltstrom beim Ausschalten eines Halbleiterschalters (106, 107) des Wechselrichters (102) bestimmt wird, wobei die Frequenz für eine folgende Wiederholung der Schritte d) bis g) erhöht wird, wenn der Schaltstrom einen, insbesondere kapazitiven, Grenzwert überschreitet.

**8.** Vorrichtung (100) zum drahtlosen Übertragen von Energie in Richtung eines elektrischen Verbrauchers (200) mittels induktiver Kopplung, die zur Durchführung des Verfahrens nach einem der vorhergehenden Ansprüche ausgebildet ist, aufweisend:

- einen Gleichrichter (101) zum Erzeugen einer Gleichspannung (UG) aus einer Netzspannung (UN),
- einen aus der Gleichspannung (UG) gespeisten Wechselrichter (102),
- eine mittels des Wechselrichters (102) angesteuerte Spule (103), mittels der zum Übertragen der Energie ein magnetisches Wechselfeld erzeugbar ist, und
- eine Steuereinheit (105), die dazu ausgebildet ist, den Wechselrichter (102) derart anzusteuern, dass ein Verfahren nach einem der vorhergehenden Ansprüche ausgeführt wird.

**9.** Vorrichtung nach Anspruch 8, **dadurch gekennzeichnet, dass**

- die Vorrichtung (100) Bestandteil eines Induktionskochfeldes ist.

**10.** System, aufweisend:

- eine Vorrichtung (100) zum drahtlosen Übertragen von Energie in Richtung eines elektrischen Verbrauchers (200) mittels induktiver Kopplung nach Anspruch 8 oder 9, und
- einen elektrischen Verbraucher (200).

**Claims**

**1.** Method for operating an apparatus (100) for wirelessly transferring energy in the direction of an electrical consumer (200) by means of inductive coupling, wherein the apparatus comprises:

- a rectifier (101) for generating a DC voltage (UG) from a power supply system voltage (UN),
- an inverter (102) fed from the DC voltage (UG) and configured to generate a pulse-width-modulated drive signal (AS), and
- a coil (103) driven by means of the pulse-width-modulated drive signal (AS), by means of which coil an alternating magnetic field is generatable for the purpose of transferring the energy,

wherein the method comprises the following steps:

- controlling an electrical actual power output by the inverter (102) to a predefinable electrical target power, wherein a frequency and a duty cycle of the pulse-width-modulated drive signal (AS) serve as manipulated variables of the control,
- **characterized in that** the following steps are carried out for the purpose of adjustment to the target power:

a) setting a start frequency (f_0),
b) setting a start duty cycle (DC_1) in such a way that the target power is undershot,
c) measuring an electrical actual power output by the inverter (102) in the case of the start frequency (f_0) set and the start duty cycle (DC_1) set,
d) choosing an adjustment target power which is less than or equal to the target power,
e) calculating a duty cycle (DC_2) which computationally corresponds to the adjustment target power,
f) setting the calculated duty cycle (DC_2),
g) measuring an electrical actual power output by the inverter (102) in the case of the frequency (f_0) set and the duty cycle (DC_2) set, and
h) repeating steps d) to g) with increasing adjustment target power until a deviation between the target power and the actual power falls below a predefined threshold,

- wherein in step e) the duty cycle (DC_3) which computationally corresponds to the adjustment target power is calculated on the basis of the duty cycle (DC_2) calculated in the preceding step e), the actual power measured in the preceding step g) and the adjustment target power.

2. Method according to Claim 1, **characterized in that**

- the adjustment target power for the repetition of steps d) to g) is limited to 2.5 times, in particular 2 times, the adjustment target power chosen in the preceding step d).

3. Method according to either of the preceding claims, **characterized in that**

- as long as the deviation between the target power and the actual power falls below the predefined threshold, the frequency and the duty cycle are altered, with the target power remaining the same, until an operating point formed from frequency (f_op1) and duty cycle is established which satisfies an optimization criterion.

4. Method according to Claim 3, **characterized in that**

- the optimization criterion is a minimum electrical power loss of the inverter (102).

5. Method according to Claim 4, **characterized in that**

- the operating point which satisfies the optimization criterion, in the case of a half-bridge inverter (102), has a duty cycle of greater than 40%, in particular has a duty cycle of close to 50%.

6. Method according to any of the preceding claims, **characterized in that**

- the start frequency (f_0) is based on data which are communicated to the apparatus (100) by the electrical consumer (200).

7. Method according to any of the preceding claims, **characterized in that**

- in step g) at least one switching current when switching off a semiconductor switch (106, 107) of the inverter (102) is determined in addition to the actual power, wherein the frequency for a subsequent repetition of steps d) to g) is increased if the switching current exceeds a, in particular, capacitive, limit value.

8. Apparatus (100) for wirelessly transferring energy in the direction of an electrical consumer (200) by means of inductive coupling, which apparatus is configured for carrying out the method according to any of the preceding claims, comprising:

   - a rectifier (101) for generating a DC voltage (UG) from a power supply system voltage (UN),
   - an inverter (102) fed from the DC voltage (UG),
   - a coil (103) driven by means of the inverter (102), by means of which coil an alternating magnetic field is generatable for the purpose of transferring the energy, and
   - a control unit (105) configured to drive the inverter (102) in such a way that a method according to any of the preceding claims is carried out.

9. Apparatus according to Claim 8, **characterized in that**

   - the apparatus (100) is part of an induction hob.

10. System, comprising:

   - an apparatus (100) for wirelessly transferring energy in the direction of an electrical consumer (200) by means of inductive coupling according to Claim 8 or 9, and
   - an electrical consumer (200).

**Revendications**

1. Procédé pour faire fonctionner un dispositif (100) destiné à la transmission sans fil d'énergie en direction d'un consommateur électrique (200) au moyen d'un couplage inductif, le dispositif possédant :

   - un redresseur (101) destiné à générer une tension continue (UG) à partir d'une tension de réseau (UN),
   - un onduleur (102) alimenté par la tension continue (UG), lequel est configuré pour générer un signal d'excitation (AS) à modulation de largeur d'impulsion, et
   - une bobine (103) excitée au moyen du signal d'excitation (AS) modulé en largeur d'impulsion, au moyen de laquelle peut être généré un champ magnétique alternatif en vue de transmettre l'énergie,

   le procédé comprenant les étapes suivantes :

   - régulation d'une puissance électrique réelle délivrée par l'onduleur (102) à une puissance électrique de consigne pouvant être prédéfinie, une fréquence et un rapport d'impulsion du signal d'excitation (AS) à modulation de largeur d'impulsions servant de grandeurs de commande de la régulation,
   - **caractérisé en ce que** les étapes suivantes sont exécutées pour l'ajustement à la puissance de consigne :

     a) réglage d'une fréquence de départ (f_0),
     b) Réglage d'un rapport cyclique de départ (DC_1) de telle sorte que la puissance de consigne soit franchie vers le bas,
     c) mesure d'une puissance électrique réelle délivrée par l'onduleur (102) à la fréquence de départ (f_0) réglée et au rapport cyclique de départ (DC_1) réglé,
     d) sélection d'une puissance de consigne d'ajustement qui est inférieure ou égale à la puissance de consigne,
     e) calcul d'un rapport cyclique (DC_2) qui correspond arithmétiquement à la puissance de consigne d'ajustement,
     f) réglage du rapport cyclique calculé (DC_2),
     g) mesure d'une puissance électrique réelle délivrée par l'onduleur (102) à la fréquence (f_0) réglée et au rapport cyclique (DC_2) réglé,
     h) répétition des étapes d) à g) lorsque la puissance de consigne d'ajustement augmente, jusqu'à ce qu'un écart entre la puissance de consigne et la puissance réelle devienne inférieur à un seuil prédéfini,

   - à l'étape e), le rapport cyclique (DC_3) qui correspond arithmétiquement à la puissance de consigne d'ajustement, étant calculé sur la base du rapport cyclique (DC_2) calculé à l'étape e) précédente, de la puissance réelle mesurée à l'étape g) précédente et de la puissance de consigne d'ajustement.

2. Procédé selon la revendication 1, **caractérisé en ce que**

   - la puissance de consigne d'ajustement pour la répétition des étapes d) à g) est limitée à 2,5 fois, notamment à 2 fois, la puissance de consigne d'ajustement sélectionnée à l'étape d) précédente.

3. Procédé selon l'une des revendications précédentes, **caractérisé en ce que**

   - dès que l'écart entre la puissance de consigne et la puissance réelle devient inférieur au seuil prédéfini, la fréquence et le rapport cyclique sont modifiés avec une puissance de consigne qui reste inchangée jusqu'à ce que s'établisse un point de fonctionnement à partir de la fréquence (f_op1) et du rapport cyclique qui satisfasse à un critère d'optimisation.

4. Procédé selon la revendication 3, **caractérisé en ce que**

   - le critère d'optimisation est une puissance électrique dissipée minimale de l'onduleur (102).

5. Procédé selon la revendication 4, **caractérisé en ce que**

   - le point de fonctionnement qui satisfait au critère d'optimisation présente, dans le cas d'un onduleur en demi-pont (102), un rapport cyclique supérieur à 40 %, notamment un rapport cyclique proche de 50 %.

6. Procédé selon l'une des revendications précédentes, **caractérisé en ce que**

   - la fréquence de départ (f_0) se base sur des données qui sont communiquées au dispositif (100) par le consommateur électrique (200) .

7. Procédé selon l'une des revendications précédentes, **caractérisé en ce que**

   - à l'étape g), au moins un courant de commutation lors de la mise hors circuit d'un commutateur à semiconducteur (106, 107) de l'onduleur (102) est déterminé en plus de la puissance réelle, la fréquence étant augmentée pour une répétition suivante des étapes d) à g) lorsque le courant de commutation dépasse une valeur limite, notamment capacitive.

8. Dispositif (100) destiné à la transmission sans fil d'énergie en direction d'un consommateur électrique (200) au moyen d'un couplage inductif, qui est configuré pour mettre en œuvre le procédé selon l'une des revendications précédentes, possédant :

   - un redresseur (101) destiné à générer une tension continue (UG) à partir d'une tension de réseau (UN),
   - un onduleur (102) alimenté à partir de la tension continue (UG),
   - une bobine (103) excitée au moyen de l'onduleur (102), au moyen de laquelle peut être généré un champ magnétique alternatif en vue de transmettre l'énergie, et
   - une unité de commande (105), laquelle est configurée pour commander l'onduleur (102) de telle sorte qu'un procédé selon l'une des revendications précédentes soit mis en oeuvre.

9. Dispositif selon la revendication 8, **caractérisé en ce que**

   - le dispositif (100) est un élément constitutif d'une table de cuisson à induction.

10. Système, possédant :

   - un dispositif (100) destiné à la transmission sans fil d'énergie en direction d'un consommateur électrique (200) au moyen d'un couplage inductif selon la revendication 8 ou 9, et
   - un consommateur électrique (200).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080035633 A1
- US 20090174263 A1
- US 20160094278 A1
- US 20110304216 A1